# EUROPEAN PATENT SPECIFICATION

(11) **EP 1 909 413 B1**
(45) Date of publication and mention of the grant of the patent: **29.12.2010**
(21) Application number: 06301016.9
(22) Date of filing: 05.10.2006
(51) Int. Cl.: H04B 10/155

(54) **Improved bandwidth limited PSBT system**
Verbessertes PSBT System mit beschränkter Bandbreite
Système PSBT à bande passante améliorée

(43) Date of publication of application: 09.04.2008
(73) Proprietor: Alcatel Lucent, 75008 Paris (FR)
(72) Inventor: Buchali, Fred, 71336, Waiblingen (DE)
(74) Representative: Schmidt, Werner Karl

(56) References cited:
- US-A1- 2004 101 314
- US-B1- 6 623 188

## Description

### Technical Field

The present invention relates to a method to optimize the transmission of Duobinary or Phase Shaped Binary Transmission /PSBT/ signals over an optical transmission system. Furthermore, it is related to a transmitter for generating Duobinary or Phase Shaped Binary Transmission /PSBT/ signals. It is also related to a system for optimized transmission of Duobinary or Phase Shaped Binary Transmission /PSBT/ signals with a transmitter, an optical transmission system and a receiver.

### Background of the invention

Electronic dispersion compensation (EDC) at 10 Gb/s data rate is now state of the art and first analog EDC circuits have been reported at 43 Gb/s data rate. Digital Viterbi equalizers (VE) processing 20 GS/s (20*10⁹ samples per second, a sample being 3 to 4 bit long) been reported, which are applied in commercial 10 Gb/s transponders enabling highest EDC efficiencies. 18 GHz bandwidth analog to digital converters with sampling rates up to 60 GS/s realized for instrumentation are close to the bandwidth requirements for Viterbi equalizers (20 GHz). The digital processing of data in a subrate processor requires high integration complexity delivered by state of the art CMOS technologies. Hence 43 Gb/s Viterbi equalizers ought to be feasible, the efficiency of VE in real 43 GHz systems has to be investigated by in-depth simulations.

The implementation of 43 Gb/s systems in existing 10 Gb/s wavelength division multiplexing (WDM) fiber links is limited in many cases by the available optical channel bandwidth, which is far below 50 GHz, if this channel spacing is applied. Spectral efficient modulation formats like phase shaped binary transmission (PSBT) and differential quaternary phase shift keying (DQPSK) are required because of suiting to the available bandwidth. The realization of PSBT systems requires limited extension of a non return to zero (NRZ) system, especially the transmitter (Tx) needs minor extension. In contrast to PSBT, the DQPSK modulation format needs different electrical/optical modulators and optical decoder circuits. Hence PSBT is of higher interest to system application because of commercial reasons.

Recently the application of EDC in PSBT systems has been reported and a low efficiency of EDC has been found. In US2002/0057478 is described a transmission system and a transmitter for optical signals using PSBT modulation. The applied modulation is limited by some optical pass band filter. The use of such filter improves the Q-factor of the transmission system. It is shown that an optimum quality can be achieved by using a filter width of 0.8/T to 1.8/T where T is the bit period time.

The optical bandwidth in WDM systems is determined by the width of each filter and the overall number of filters (AWG, ROADM) in the link. In more complex links especially in metro links a higher number of filter elements may be applied. In next generation 43 Gb/s systems, a compensator for residual chromatic dispersion (RCDC) will be applied in the receiver. The RCDC needs any adaptation to tune it for optimum system performance. PSBT systems suffer from a non optimum performance at zero distortion. They are two settings of RCDC for optimum system performance in positive and negative dispersion region. It runs randomly in one optimum at zero dispersion. If increasing the dispersion of link to positive or negative values the tuning range is unsymmetrical and very small in one direction. Even in case of RCDC application very low dispersion tolerances may occur.

PSBT is of very high interest for many competitors and it is planned to define PSBT systems in an ITU standard. Today's task is to find the optimum technical solution and to consider this solution during standardisation. Standard PSBT transmitters are realised with fixed settings of parameters for one application without the opportunity to adjust it to the available transmission link. Mostly, they are optimised for high optical bandwidth links. In the literature the optimisation of PSBT by optical bandwidth limitation has been reported. Therein the interaction of transmitter and bandwidth of channel are considered, not the receiver. The application of Viterbi equalizers in receivers for PSBT systems has been published and a low improvement of dispersion tolerances has been found. Up to now no setup for optimisation of interacting transmitter, channel and receiver has been found.

Adjustment of RCDC feedback signals have been reported with a sensitivity to CD, only. If these feedback signals are used, which need an increased effort, the systems are operated at non optimum performance. Overall performance sensitive feedback signals are available. They can be applied, but, if operating with standard PSBT systems the running into local optima during adaptation cannot be avoided.

US 2004/0101314 A1 discloses a duobinary optical transmission apparatus with an optical band pass filter for generating a duobinary optical signal without using an electric low pass filter.

US 6,623,188 B1 discloses an optical data transmitter comprising a differential amplifier for generating a four-level data signal and a complementary four-level data signal. An optical data modulator modulates an amplitude of an optical signal applied to an optical input thereof in response to at least one of the four-level data signal and the complementary four-level data signal to generate a modulated optical amplitude data signal that is bipolar and that includes four amplitude levels. A filter is coupled between the differential amplifier and the modulator for reducing the bandwidth of the four-level and the complementary four-level data signal.

### Summary of the invention

In view of the above, it is an object of the present invention to provide a method and a system for optimizing the transmission of Duobinary or Phase Shaped Binary Transmission (PSBT) signals over an optical transmission system.

This object is achieved in accordance with the invention by applying a method to optimize the transmission of Duobinary or Phase Shaped Binary Transmission (PBST) signals over an optical transmission system comprising the steps to precode a data stream to be transmitted over the optical transmission system while generating out of that precoded data stream a three-level electrical signal using a variable electrical low pass filter latter electrical signal is the fed to an interferometer or push-pull modulator to generate a corresponding optical PSBT signal. Such resulting the optical transmis- sion system. An optimization according to the invention of the transmission quality for the optical PSBT signal over the optical transmission system is reached by adapting the bandwidth of the variable electrical low pass filter with respect to the chosen bandwidth of a tuneable optical filter through which the optical PSBT signal are forwarded either at the output of the transmitter side or at the input of the receiver side.

Such optimization is performed according to an embodiment using look up table with predefined values corresponding to an optical transmission system with known link and receiver characteristics. According to an alternative embodiment, a feed back signal is used to adapt the electrical low pass filter together with the tuneable optical band pass filter. It is conceivable to use some feedback signal generation setup to control the variation of the electrical low pass filter.

In some embodiment according to the invention, the bandwidth of the optical band pass filter is selected with respect to the bandwidth of the channel within which the optical signal are transmitted over the optical transmission network. Both the low pass filter and the band pass filter are adapted to a non optimum eye opening at transmission side setting the optical zero close to zero i.e. to a minimum magnitude. That minimum is then chosen for some specific binary sequence signal like e.g. 010. In some alternative embodiment, the receiver comprises a Viterbi equalizer.

The invention further relates to a transmitter for generating Duobinary or Phase Shaped Binary Transmission (PSBT) signals which comprises a precoder for precoding a data stream to be transmitted over an optical transmission system, variable electrical low pass filter for generating a three level electrical signal out of that precoded data stream, an interferometer or push-pull modulator feed with that three level electrical signal to generate a corresponding optical PSBT signal. The bandwidth of the variable electrical low pass filter is adapted with respect to the chosen bandwidth of a tuneable optical filter through which the optical PSBT signal is forwarded to optimize the transmission quality over the optical transmission system. In an embodiment according to the invention, the tuneable optical band pass filter is at the output of the transmitter while possibly connected to some feedback path to be used for the optimization.

The invention also relates to a system for optimized transmission of PSBT signals comprising a transmitter for generating PSBT signals with a precoder for precoding a data stream to be transmitted over an optical transmission system being part of that system, variable electrical low pass filter for generating a three level electrical signal out of that precoded data stream, an interferometer or push-pull modulator feed with that three level electrical signal to generate a corresponding optical PSBT signal and a receiver interconnected with the transmitter via the optical transmission system. According to the invention, the bandwidth of the variable electrical low pass filter is adapted with respect to the chosen bandwidth of a tuneable optical filter being part of that system and through which the optical PSBT signal is forwarded to optimize the transmission quality over the optical transmission system.

In some embodiment according to the invention, the tuneable optical band pass filter is at the input of the receiver. In some alternative, the receiver comprises a Viterbi equalizer.

Advantageous developments of the invention are described in the dependent claims, the following description and the drawings.

### Description of the drawings

An exemplary embodiment of the invention will now be explained further with the reference to the attached drawings in which:
Fig. 1 is a schematic diagram of a typical system setup according to the invention;
Fig. 2 is a schematic diagram of a transmitter according to the invention;
Fig. 3 is a schematic diagram of a receiver according to the invention;

### Detailed description of preferred embodiments

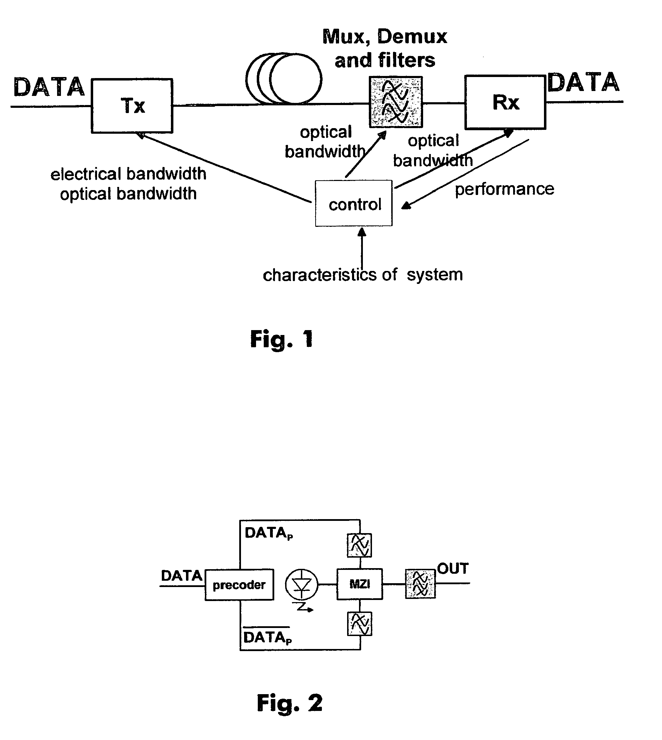

On figure 1 is shown a transmission system consisting of a transmitter, a multiplexer, fiber links with add and drop multiplexer and a demultiplexer before the receiver. The optical components (MUX, ADM, DEMUX) may act as optical filters due to their limited bandwidth. On figure 2 is shown a transmitter for generating optical PSBT signals as used for the present invention. It consists of a precoder, electrical low pass filters and a push-pull modulator or Mach-Zehnder interferometer (MZI). The bandwidth limited PSBT signal is generated by precoding and low pass filtering of the non-inverted and inverted precoded data streams. Latter precoded signal drive the dual drive MZI. The cut-off frequency of the electrical low pass filters is about 30% of bit rate frequency. After being filtered by the low pass filter, a three level signal with "-1", "0", and "1" is then available, which is necessary to generate the three level PSBT optical signal.

The electrical low pass filters are optimised according to the present invention for the whole system. The optimisation is realised using variable electrical low pass filters while the variation consists on the possibility to adapt the cut off frequency of that filters by more than 20%. Also, an additional tuneable optical filter can be used which cuts the spectra leading to a reduction of field components at logical "0". The optimisation of the filters particularly the electrical low pass filters, needs the knowledge of optical channel and the receiver i.e. to know all the characteristics of the links within the optical transmission system as well as the receiver characteristic. The setting of the transmitter for the optimization can be performed following different possibilities. One possibility is to use a look up table with predefined values corresponding to an optical transmission system with well known links and receiver characteristics. It has the big advantage that no feed back signal must be collected and can be therefore quite cost effective. But it is rather sensible to any changes or instabilities within the optical transmission system.

An alternative for the optimization can be achieved using some feedback signal. Such signal can be collected from the receiver via back channel or generated in the receiver. As shown on figure 1, a control apparatus collects that feedback signal to control accordingly the cut off frequency of the electrical variable low pass filters. The cut off frequency can be chosen at around 3 GHz and be varied by 20% i.e. ± 300 MHz till achieving maximal performance i.e. minimal bit errors. Alternately, the feed back signal is generated at the transmitter behind the optical filter when placed on the transmitter side.

In this application at least one optical filter can be applied to realise a system with optical bandwidth limitation. The bandwidth limitation may be realised by separate filters, by optical network elements or by both. The setting/choice of optical filters can be performed by considering the whole channel. Dependent on application the lowest bandwidth filter is possibly placed at receiver side.

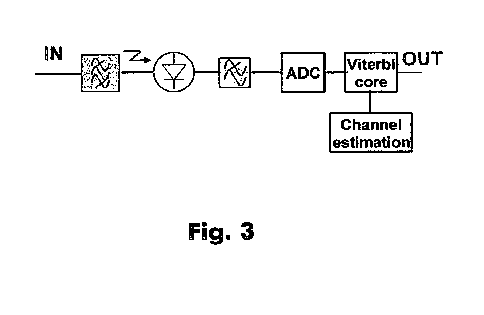

On figure 3 is shown an example of a receiver according to the invention with a lowest electrical bandwidth filter placed after the diode acting as an optical/electrical converter. Also is placed at the input of that receiver the tuneable optical band pass filter. In some other alternatives, that tuneable optical band pass filter can be placed at the output of the transmitter or simply omitted since the corresponding properties being already obtained by the different elements within the optical transmission system. On the embodiment according to figure 3, the receiver is assembled with an analog/digital converter ADC and a digital Viterbi equalizer. A residual chromatic dispersion compensation RCDC can be applied optionally. The optical filter is adjusted with same boundary conditions as the Tx filter. If possibly, no filter is in the Tx and lowest bandwidth filter is applied in Rx. The adaptation of RCDC can be performed by the Viterbi channel estimator. In another implementation, the RCDC is adjusted by a chromatic dispersion sensitive feedback or by an eye monitor. A further implementation considers a variable optical filter with feedback from channel estimator or eye monitor. Due to interaction of feedback signal, variable filter in Rx any suboptimum setting can be avoided.

The optimization using e.g. feedback is required at least once during installation. If a Viterbi equalizer is used at the receiver, then the electrical bandwidth in Tx is preferably 105% of the optimum bandwidth of standard Rx. The electrical bandwidth of Rx is set to 90% of optimum bandwidth for standard Rx. A comprehensive investigation of strongly bandwidth limited PSBT systems at 43 Gb/s was carried out to evaluate the dispersion tolerances in electronic dispersion compensation supported receivers. The application of Viterbi equalizers enables the reduction of optical bandwidth down to 30 GHz, whereas the standard receiver degrades already below 38 GHz. Viterbi equalization enables additional bandwidth limitation by another 30%. Even at low bandwidth high dispersion tolerances of 20 ps differential group delay (DGD) and 235 ps/nm chromatic dispersion (CD) have been achieved. A low optical bandwidth in combination with Viterbi equalizer application suppresses the system degradation at zero dispersion completely. Hence the application Viterbi equalizers in bandwidth limited PSBT systems gives high margin in optical bandwidth with a 30% reduced lower limit, increased CD and DGD tolerances by 10% and 50%, respectively, reducing the requirements on system application especially of 50 GHz spaced DWDM systems.

## Claims

1. A method to optimize the transmission of Duobinary or Phase Shaped Binary Transmission /PSBT/ signals over an optical transmission system comprising the following steps:
• precoding a data stream to be transmitted over the optical transmission system;
• generating out of that precoded data stream a three level electrical signal using variable electrical low pass filter;
• feeding that electrical signal to an interferometer or push-pull modulator to generate a corresponding optical PSBT signal;
• forwarding that optical PSBT signal through a tuneable optical band pass filter wherein an optimization of transmission quality over the optical transmission system is reached by adapting the bandwidth of the variable electrical low pass filter with respect to the chosen bandwidth of the optical filter.

2. The method according to claim 1 wherein the generated optical PSBT signal is forwarded through the tuneable optical band pass filter at the receiver after being transmitted over the optical transmission system.

3. The method according to claim 1 wherein the adaptation of the electrical low pass filter together with the optical band pass filter is performed using look up table with predefined values corresponding to an optical transmission system with known links and receiver characteristics.

4. The method according to claim 1 wherein the adaptation of the electrical low pass filter together with the optical band pass filter is performed using a feedback signal.

5. The method according to claim 4 wherein the feedback signal is obtained at the output of the optical filter.

6. The method according to claim 1 wherein the bandwidth of the optical band pass filter is selected with respect to the bandwidth of the channel within which the optical signal are transmitted over the optical transmission network.

7. The method according to claim 1 wherein both the low pass filter and the band pass filter are adapted to a non optimum eye opening at transmission side setting the optical zero to a minimum magnitude.

8. The method according to claim 1 wherein the optimization of transmission quality is performed taking into account a receiver comprising a Viterbi equalizer.

9. A transmitter for generating Duobinary or Phase Shaped Binary Transmission /PSBT/ signals comprises a precoder for precoding a data stream to be transmitted over an optical transmission system, variable electrical low pass filter for generating a three level electrical signal out of that precoded data stream, an interferometer or push-pull modulator feed with that three level electrical signal to generate a corresponding optical PSBT signal wherein the bandwidth of the variable electrical low pass filter is adapted with respect to the chosen bandwidth of a tuneable optical filter through which the optical PSBT signal is forwarded to optimize the transmission quality over the optical transmission system.

10. The transmitter according to claim 9 wherein it comprises the tuneable optical band pass filter at its output.

11. The transmitter according to claim 9 wherein it is connected to feedback signal path to be used for the optimization.

12. A system for optimized transmission of Duobinary or Phase Shaped Binary Transmission /PSBT/ signals comprising a transmitter for generating PSBT signals with a precoder for precoding a data stream to be transmitted over an optical transmission system being part of that system, variable electrical low pass filter for generating a three level electrical signal out of that precoded data stream, an interferometer or push-pull modulator feed with that three level electrical signal to generate a corresponding optical PSBT signal and a receiver interconnected with the transmitter via the optical transmission system wherein the bandwidth of the variable electrical low pass filter is adapted with respect to the chosen bandwidth of a tuneable optical filter being part of that system and through which the optical PSBT signal is forwarded to optimize the transmission quality over the optical transmission system.

13. The system according to claim 12 wherein the receiver comprises at its input the tuneable optical band pass filter.

14. The system according to claim 12 wherein the receiver comprises a Viterbi equalizer.

## Patentansprüche

1. Ein Verfahren zur Optimierung der Übertragung von duobinären oder binären Übertragungssignalen mit geglättetem Phasenverlauf /PSBT/ über ein optisches Übertragungssystem, die folgenden Schritte umfassend:
• Vorcodieren eines über das optische Übertragungssystem zu übertragenden Datenstroms;
• Erzeugen, aus diesem vorcodierten Datenstrom, eines elektrischen Drei-Pegel-Signals unter Verwendung eines regelbaren elektrischen Tiefpassfilters;
• Einspeisen dieses elektrischen Signals in ein Interferometer oder einen Gegentaktmodulator, um ein entsprechendes optisches PSBT-Signal zu erzeugen;
• Weiterleiten dieses optischen PSBT-Signals durch einen abstimmbaren optischen Bandpassfilter, wobei eine Optimierung der Übertragungsqualität über das optische Übertragungssystem durch das Anpassen der Bandbreite des regelbaren elektrischen Tiefpassfilters in Bezug auf die gewählte Bandbreite des optischen Filters erreicht wird.

2. Das Verfahren nach Anspruch 1, wobei das erzeugte optische PSBT-Signal nach der Übertragung über das optische Übertragungssystem durch den abstimmbaren optischen Bandpassfilter am Empfänger weitergeleitet wird.

3. Das Verfahren nach Anspruch 1, wobei die Anpassung des elektrischen Tiefpassfilters zusammen mit dem optischen Bandpassfilter unter Verwendung einer Lookup-Tabelle mit vorgegebenen Werten, welche einem optischen Übertragungssystem mit bekannten Links und Empfängereigenschaften entsprechen, erfolgt.

4. Das Verfahren nach Anspruch 1, wobei die Anpassung des elektrischen Tiefpassfilters zusammen mit dem optischen Bandpassfilter unter Verwendung eines Feedback-Signals erfolgt.

5. Das Verfahren nach Anspruch 4, wobei das Feedback-Signal am Ausgang des optischen Filters erhalten wird.

6. Das Verfahren nach Anspruch 1, wobei die Bandbreite des optischen Bandpassfilters in Bezug auf die Bandbreite des Kanals, in welchem die optischen Signale über das optische Übertragungsnetzwerk übertragen werden, ausgewählt wird.

7. Das Verfahren nach Anspruch 1, wobei sowohl der Tiefpassfilter als auch der Bandpassfilter einer nicht optimalen Augenöffnung an der Übertragungsseite angepasst werden, welche den optischen Nullwert auf eine Mindestgröße einstellt.

8. Das Verfahren nach Anspruch 1, wobei die Optimierung der Übertragungsqualität unter Berücksichtigung eines Empfängers mit einem Viterbi-Entzerrer erfolgt.

9. Ein Sender zum Erzeugen von duobinären oder binären Übertragungssignalen mit geglättetem Phasenverlauf /PSBT/, umfassend einen Vorcodierer zum Vorcodieren eines über ein optisches Übertragungssystem zu übertragenden Datenstroms, einen regelbaren elektrischen Tiefpassfilter zum Erzeugen eines elektrischen Drei-Pegel-Signals aus diesem vorcodierten Datenstrom, ein Interferometer oder einen mit diesem elektrischen Drei-Pegel-Signal versorgten Gegentaktmodulator zum Erzeugen eines entsprechenden optischen PSBT-Signals, wobei die Bandbreite des regelbaren elektrischen Tiefpassfilters in Bezug auf die gewählte Bandbreite eines abstimmbaren optischen Filters, durch welchen das optische PSBT-Signal weitergeleitet wird, angepasst wird, um die Übertragungsqualität über das optische Übertragungssystem zu optimieren.

10. Der Sender nach Anspruch 9, wobei der Sender an seinem Ausgang den abstimmbaren optischen Bandpassfilter umfasst.

11. Der Sender nach Anspruch 9, wobei der Sender an einen für die Optimierung zu verwendenden Feedback-Signalpfad angeschlossen ist.

12. Ein System für die optimierte Übertragung von duobinären oder binären Übertragungssignalen mit geglättetem Phasenverlauf /PSBT/, umfassend einen Sender zur Erzeugung von PSBT-Signalen mit einem Vorcodierer zum Vorcodieren eines über das optische Übertragungssystem, welches Bestandteil dieses Systems ist, zu übertragenden Datenstroms, einen regelbaren elektrischen Tiefpassfilter zum Erzeugen eines elektrischen Drei-Pegel-Signals aus diesem precodierten Datenstrom, ein Interferometer oder einen Gegentaktmodulator, welcher mit diesem elektrischen Drei-Pegel-Signal versorgt wird, um ein entsprechendes optisches PSBT-Signal zu erzeugen, und einen Empfänger, welcher über das optische Übertragungssystem mit dem Sender verbunden ist, wobei die Bandbreite des regelbaren elektrischen Tiefpassfilters in Bezug auf die gewählte Bandbreite eines abstimmbaren optischen Filters, welcher Bestandteil dieses Systems ist und durch welchen das optische PSBT-Signal weitergeleitet wird, angepasst wird, um die Übertragungsqualität über das optische Übertragungssystem zu optimieren.

13. Das System nach Anspruch 12, wobei der Empfänger an seinem Ausgang den abstimmbaren optischen Bandpassfilter umfasst.

14. Das System nach Anspruch 12, wobei der Empfänger einen Viterbi-Entzerrer umfasst.

## Revendications

1. Procédé d'optimisation de la transmission de signaux de transmission duobinaires ou binaires à décalage de phase /PSBT/ via un système de transmission optique, comprenant les étapes suivantes :
• précodage d'un flux de données à transmettre via le système de transmission optique ;
• génération à partir de ce flux de données précodé d'un signal électrique à trois niveaux en utilisant un filtre passe-bas électrique variable ;
• application de ce signal électrique sur un interféromètre ou un modulateur push-pull pour générer un signal optique PSBT correspondant ;
• transfert de ce signal optique PSBT par un filtre passe-bande optique réglable, dans lequel une optimisation de la qualité de transmission via le système de transmission optique est atteinte en adaptant la bande passante du filtre passe-bas électrique variable en relation avec la bande passante choisie du filtre optique.

2. Procédé selon la revendication 1, dans lequel le signal optique PSBT généré est transféré par le filtre passe-bande optique réglable au récepteur après avoir été transmis via le système de transmission optique.

3. Procédé selon la revendication 1, dans lequel l'adaptation du filtre passe-bas électrique avec le filtre passe-bande optique est réalisée à l'aide d'une table de consultation avec des valeurs prédéfinies correspondant à un système de transmission optique avec des caractéristiques de liaisons et de récepteur connues.

4. Procédé selon la revendication 1, dans lequel l'adaptation du filtre passe-bas électrique avec le filtre passe-bande optique est réalisée à l'aide d'un signal de rétroaction.

5. Procédé selon la revendication 4, dans lequel le signal de rétroaction est obtenu à la sortie du filtre optique.

6. Procédé selon la revendication 1, dans lequel la bande passante du filtre passe-bande optique est sélectionnée en relation avec la bande passante du canal dans lequel les signaux optiques sont transmis via le réseau de transmission optique.

7. Procédé selon la revendication 1, dans lequel le filtre passe-bas comme le filtre passe-bande sont adaptés à une ouverture oculaire non optimale sur le côté de transmission en réglant le zéro optique à une amplitude minimale.

8. Procédé selon la revendication 1, dans lequel l'optimisation de la qualité de transmission est réalisée en prenant en compte un récepteur comprenant un égaliseur de Viterbi.

9. Emetteur pour générer des signaux de transmission duobinaires ou binaires à décalage de phase /PSBT/, comprenant un précodeur pour précoder un flux de données à transmettre via un système de transmission optique, un filtre passe-bas électrique variable pour générer un signal électrique à trois niveaux à partir de ce flux de données précodé, un interféromètre ou un modulateur push-pull alimenté avec ce signal électrique à trois niveaux pour générer un signal PSBT optique correspondant, dans lequel la bande passante du filtre passe-bas électrique variable est adaptée en relation avec la bande passante choisie d'un filtre optique réglable par lequel le signal PSBT optique est transféré pour optimiser la qualité de transmission via le système de transmission optique.

10. Emetteur selon la revendication 9, comprenant le filtre passe-bande optique réglable à sa sortie.

11. Emetteur selon la revendication 9, dans lequel l'émetteur est connecté au chemin de signal de rétroaction à utiliser pour l'optimisation.

12. Système pour une transmission optimisée de signaux de transmission duobinaires ou binaires à décalage de phase IPSBT/, comprenant un émetteur pour générer des signaux PSBT avec un précodeur pour précoder un flux de données à transmettre via un système de transmission optique qui fait partie de ce système, un filtre passe-bas électrique variable pour générer un signal électrique à trois niveaux à partir de ce flux de données précodé, un interféromètre ou un modulateur push-pull alimenté avec ce signal électrique à trois niveaux pour générer un signal PSBT optique correspondant et un récepteur interconnecté avec l'émetteur via le système de transmission optique, dans lequel la bande passante du filtre passe-bas électrique variable est adaptée en relation avec la bande passante choisie d'un filtre optique réglable faisant partie de ce système et par lequel le signal PSBT optique est transféré pour optimiser la qualité de transmission via le système de transmission optique.

13. Système selon la revendication 12, dans lequel le récepteur comprend à son entrée le filtre passe-bande optique réglable.

14. Système selon la revendication 12, dans lequel le récepteur comprend un égaliseur de Viterbi.
